# EUROPEAN PATENT SPECIFICATION

(11) **EP 3 138 174 B1**
(45) Date of publication and mention of the grant of the patent: **05.12.2018**
(21) Application number: 15785323.5
(22) Date of filing: 29.04.2015
(51) Int. Cl.: H02J 1/10, H02J 9/06, H02J 3/34

(54) **AUTO-SYNCHRONOUS ISOLATED INLET POWER CONVERTER**
AUTOSYNCHRONER ISOLIERTER EINLASSLEISTUNGSWANDLER
CONVERTISSEUR DE PUISSANCE D'ENTRÉE ISOLÉE AUTOSYNCHRONE

(30) Priority: 29.04.2014 US 201414264891
(43) Date of publication of application: 08.03.2017
(73) Proprietor: Solpad, Inc., Mountain View, CA 94041 (US)
(72) Inventor: ESTES, Christopher A., Mountain View, CA 94041 (US)
(74) Representative: Findlay, Alice Rosemary
(86) International application number: PCT/US2015/028222
(87) International publication number: WO 2015/168244

(56) References cited:
- EP-A1- 2 262 089
- WO-A1-2009/073867
- WO-A1-2010/132369
- WO-A2-2014/144354
- US-A1- 2005 121 067
- US-A1- 2008 143 188
- US-A1- 2008 283 118
- US-A1- 2011 278 932
- US-A1- 2012 256 490
- US-A1- 2013 057 073
- US-A1- 2014 008 987
- US-A1- 2014 077 597
- US-A1- 2014 265 591

## Description

### CROSS-REFERNCE TO RELATED APPLICATIONS

This application claims the benefit of United States Application No. 13/843,573, filed March 15, 2013, which claims the benefit of United States Provisional Appl. No. 61/719,140, filed 10/26/2012, also claims the benefit of International Application No. PCT/US14/28723, filed March 14, 2014, also claims the benefit of United States Application No. 14/264,891 filed April 29, 2014.

### BACKGROUND

### Field of Disclosure

The present disclosure relates generally to power converters and specifically to power converters that operate as both a master and a slave.

### Related Art

Conventional power inverters convert an input power to an output power so that the output power then powers external electronic devices as requested by an individual. Conventional power inverters are designed so that the input power is converted to the output power so that the output power is at a maximum power level based on the design specifications of the conventional power inverter. Conventional power inverters are limited to powering external electronic devices that require power that is equal to or less than the maximum power level of the conventional power inverters. Conventional power inverters cannot power external electronic devices that require power that exceeds the maximum power level of the conventional power inverters.

For example, a conventional power inverter converts input power which is DC power to output power that is AC power. The conventional power inverter is designed so that the DC power is converted to AC power at a particular maximum output power level, e.g., of 1500 Watts (W). The conventional power inverter can power a hair dryer that requires 1200W but cannot power an electric saw that requires 2000W. The user requesting to power the electric saw with the conventional power inverter designed for 1500W cannot power the electric saw with that conventional power inverter.

Conventional power inverters cannot be daisy chained together to increase the output power of each conventional power inverter included in the daisy chain. For example, the conventional power inverter that is designed so that the output power is at a maximum level of 1500W cannot be daisy chained with another conventional power inverter that is designed so that the output power is also at a maximum power level of 1500W to increase the output power level of the daisy chain to power the electric saw that requires 2000W. Rather another conventional power inverter that is designed so that the output power is at a maximum power level that is equal to or exceeds 2000W would have to be located to power the electric saw.

### BRIEF DESCRIPTION OF THE DRAWINGS/FIGURES

Embodiments of the present disclosure are described with reference to the accompanying drawings. In the drawings, like reference numerals indicate identical or functionally similar elements. Additionally, the left most digit(s) of a reference number identifies the drawing in which the reference number first appears.
FIG. 1 illustrates a top-elevational view of an exemplary auto-synchronous isolated inlet power converter according to one exemplary embodiment of the present disclosure;
FIG. 2 illustrates a top-elevational view of an exemplary auto-synchronous isolated inlet power converter configuration according to one exemplary embodiment of the present disclosure;
FIG. 3 is a block diagram of the exemplary auto-synchronous isolated inlet power converter that may be used in the auto-synchronous isolated inlet power converter configuration according to one exemplary embodiment of the present disclosure;
FIG. 4 is a block diagram of the exemplary auto-synchronous isolated inlet power converter that may be used in the auto-synchronous isolated inlet power converter configuration according to one exemplary embodiment of the present disclosure;
FIG. 5 is a block diagram of the exemplary auto-synchronous isolated inlet power converter configuration according to one exemplary embodiment of the present disclosure;
FIG. 6 is a block diagram of the exemplary auto-synchronous isolated inlet power converter that may be used in the auto-synchronous isolated inlet power converter configuration according to one exemplary embodiment of the present disclosure.

The present disclosure will now be described with reference to the accompanying drawings. In the drawings, like reference numbers generally indicate identical, functionally similar, and/or structurally similar elements. The drawings in which an element first appears is generally indicated by the leftmost digit(s) in the reference number.

### DETAILED DESCRIPTION OF THE PRESENT DISCLOSURE

The following Detailed Description refers to accompanying drawings to illustrate exemplary embodiments consistent with the present disclosure. References in the Detailed Description to "one exemplary embodiment," "an exemplary embodiment," an "example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic may be described in connection with an exemplary embodiment, it is within the knowledge of those skilled in the art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the spirit and scope of the present disclosure. Therefore, the Detailed Description is not meant to limit the present disclosure. Rather, the scope of the present disclosure is defined only in accordance with the following claims.

Embodiments of the present disclosure may be implemented in hardware, firmware, software, or any combination thereof. Embodiments of the present disclosure may also be implemented as instructions supplied by a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical optical, acoustical or other forms of propagated signals (e.g., carrier waves, infrared signals, digital signals, etc.), and others. Further firmware, software routines, and instructions may be described herein as performing certain actions. However, it should be appreciated that such descriptions are merely for convenience and that such actions in fact result from computing devices, processors, controllers, or other devices executing the firmware, software, routines, instructions, etc.

For purposes of this discussion, each of the various components discussed may be considered a module, and the term "module" shall be understood to include at least one of software, firmware, and hardware (such as one or more circuit, microchip, or device, or any combination thereof), and any combination thereof. In addition, it will be understood that each module may include one, or more than one, component within an actual device, and each component that forms a part of the described module may function either cooperatively or independently of any other component forming a part of the module. Conversely, multiple modules described herein may represent a single component within an actual device. Further, components within a module may be in a single device or distributed among multiple devices in a wired or wireless manner.

The following Detailed Description of the exemplary embodiments will so fully reveal the general nature of the present disclosure that others can, by applying knowledge of those skilled in the relevant art(s), readily modify and/or adapt for various applications such exemplary embodiments, without undue experimentation, without departing from and scope of the present disclosure. Therefore, such adaptations and modifications are intended to be within the meaning of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

### AN EXEMPLARY AUTO-SYNCHRONOUS ISOLATED INLET POWER CONVERTER

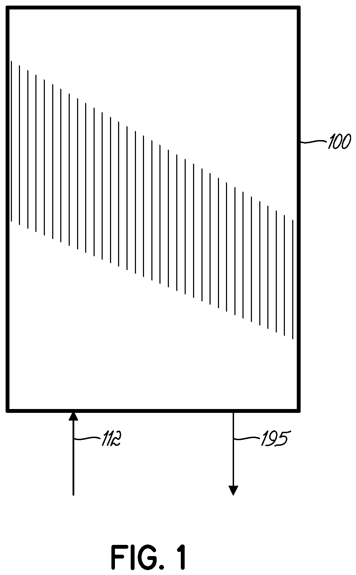

FIG. 1 illustrates a top-elevational view of an exemplary auto-synchronous isolated inlet power converter according to an exemplary embodiment of the present disclosure. An auto-synchronous isolated inlet power converter 100 may be a standalone AC power generating device so that the power converter 100 is not reliant on converting power provided by other power sources to the power converter 100. For example, the power converter 100 is not limited to generating output AC power 195 by passing through the external input AC power 112 received from a power source into the output AC power 195 when the power converter 100 is coupled to the power source. Rather, the power converter 100 may still generate standalone output AC power 195 when isolated from the power source and not receiving the external input AC power 112 from the power source. Further, the power converter 100 automatically synchronizes to the external input AC power 112 without user intervention. As a result, the power converter 100 may parallel the output AC power 195 generated from the inverted DC power provided by the DC source with the external input AC power 112 when the output AC power 195 is synchronized with the external input AC power 112. The DC source may be internal and/or external to the power converter 100 that will be apparent to those skilled in the relevant art(s) without departing from the scope of the disclosure.

The power converter 100 may receive the external input AC power 112. The external input AC power 112 may be AC power that is generated by a power source, such as a generator, AC inverter, and/or a utility grid. The power converter 100 may receive the external input AC power 112 generated by the power source when the power converter 100 is coupled to the power source. The external input AC power 112 may also be AC power generated by a second power converter when the power converter 100 is coupled to the second power converter. The external input AC power 112 may also be AC power generated by an AC power generator, AC power inverter, a sinusoidal AC power inverter, and/or any other type of AC power source independent from the power converter 100 that will be apparent to those skilled in the relevant art(s) without departing from the spirit and scope of the disclosure.

The power converter 100 may generate the output AC power 195 that is in parallel with the external input AC power 112 when the output AC power 195 is synchronized with the external input AC power 112. The power converter 100 may sense the external input AC power 112 when the power converter 100 is coupled to a power source. The power converter 100 may also sense the external input AC power 112 when the power converter 100 is coupled to the second power converter and the second power converter is providing the external input AC power 112 to the power converter 100.

The power converter 100 may determine whether the external input AC power 112 is synchronized with the output AC power 195 based on the power signal characteristics of the external input AC power 112 and the output AC power 195. The power signal characteristics are characteristics associated with the sinusoidal waveform included in the external input AC power 112 and the output AC power 195. The power converter 100 may generate the output AC power 195 that is in parallel with the external input AC power 112 when the power signal characteristics of the external input AC power 112 are within a threshold of the power signal characteristics of the output AC power 195 so that the external input AC power 112 and the output AC power 195 are synchronized. The power converter 100 may refrain from generating the output AC power 195 that is in parallel with the external input AC power 112 when the power signal characteristics of the external input AC power 112 are outside the threshold of the power signal characteristics of the output AC power 195 where the external input AC power 112 and the output AC power 195 are not synchronized.

For example, the power converter 100 determines whether the external input AC power 112 and the output AC power 195 are synchronized based on the frequency and the voltage of the sinusoidal waveform included in the external input AC power 112 and the frequency and the voltage of the sinusoidal waveform included in the output AC power 195. The power converter 100 generates the output AC power 195 that is in parallel with the external input AC power 112 when the frequency and the voltage of the external input AC power 112 are within the threshold of 10% from the frequency and the voltage of the output AC power 195 so that the external input AC power 112 and the output AC power 195 are synchronized. The power converter 100 refrains from generating the output AC power 195 that is in parallel with the external input AC power 112 when the frequency and the voltage of the external input AC power 112 are outside the threshold of 10% from the frequency and the voltage of the output AC power 195 where the external input AC power 112 and the output AC power 195 are not synchronized. Rather, the power converter 100 generates the output AC power 195 that is generated from the DC source and refrains from combining the output AC power 195 with the external input AC power 112.

The power signal characteristics may include but are not limited to frequency, phase, amplitude, current, voltage and/or any other characteristic of a power signal that will be apparent to those skilled in the relevant art(s) without departing from the scope of the disclosure. The power converter 100 may store the power signal characteristics of the external input AC power 112. The threshold of the power signal characteristics associated with the input power as compared to the output power may be any threshold that prevents damage from occurring to the power converter 100 by combining the external input AC power 112 and the output AC power 195 when the power signal characteristics of each significantly differ resulting in damage that will be apparent to those skilled in the relevant art(s) without departing from the scope of the disclosure.

The output AC power 195 generated by the power converter 100 may be AC power that may be used to power electronic devices external to the power converter 100, such as a hairdryer, for example. The output AC power 195 may also be AC power that may be provided to a third power converter. The power converter 100 may also convert the external input AC power 112 to DC power and store the DC power internally to the power converter 100 when the power converter is receiving the external input AC power 112 but not providing the output AC power 195 to the external electronic devices and/or the third power converter.

The power converter 100 may continue to provide output AC power 195 that is not in parallel with the external input AC power 112 after the power converter 100 is no longer receiving the external input AC power 112 thus the power converter 100 is not reliant on any other source to generate the output AC power 195. For example, the power converter 100 continues to provide output AC power 195 that is not in parallel with the external input AC power 112 after the power converter 100 is no longer coupled to a power source such that the power converter 100 is no longer receiving the external input AC power 112 from the power source. In another example, the power converter 100 continues to provide output AC power 195 that is not in parallel with the external input AC power 112 after the power converter 100 is no longer receiving the external input AC power 112 from the second power converter.

The power converter 100 may sense when the power converter 100 is no longer receiving the external input AC power 112. The power converter 100 may then internally generate the output AC power 195 from the previously stored DC power by the power converter 100. For example, the power converter 100 may have previously stored DC power that was converted from the input AC power 112 when the power converter 100 was receiving the input AC power 112. In another example, the power converter 100 may also have previously stored the DC power that was converted from solar energy captured by the power converter 100.

The power converter 100 may internally generate the output AC power 195 by converting the previously stored DC power into the output AC power 195. In one embodiment, the power converter 100 may synchronize the power signal characteristics of the output AC power 195 that was converted from the previously stored DC power to be within the threshold of the power signal characteristics of the input AC power 112 despite no longer receiving the input AC power 112. For example, the power converter 100 synchronizes the output AC power 195 that was converted from the previously stored DC power to have frequency and voltage that is within a threshold of 10% from the input AC power 112 when the power converter 100 was receiving the input AC power 112. The power converter 100 then provides the output AC power 195 when the power converter 100 is no longer receiving the input AC power 112 while providing such output AC power 195 with frequency and voltage that is within the threshold of 10% from the previously received input AC power 112.

The power converter 100 may be scalable in size and may be able to provide various levels of output power. For example, the power converter 100 may be a portable model that may output approximately 250W. In another example, the power converter 100 may be a permanent rooftop model that may output 2.5kW.

The power converter 100 may also be efficiently packaged so that each of the necessary components required to generate the output AC power 195 are packaged within a single housing for the power converter 100. For example, as will be discussed in more detail below, the DC source, DC to AC converter, controller, and/or each other necessary component required to generate the output AC power 195 may be housed within a single housing for the power converter 100. The housing of each necessary component within the single housing for the power converter 100 minimizes the amount of cabling required for the power converter 100 so that transmission loss from the cabling is minimized.

The power converter 100 may also be relatively user friendly in that an individual may find that operating the power converter 100 requires relatively minimal effort for the individual. For example, as will be discussed in more detail below, the individual simply plugs in an external electronic device into the outlet provided by the power converter 100 to power the external electronic device. In another example, the individual simply plugs in an additional power converter into the outlet provided by the power converter 100 to daisy chain the additional power converter to the power converter 100. In yet another example, the power converter 100 that is daisy chained to the additional power converter automatically establish a relationship so that the individual is not required to manually designate the master and the slave.

### AN EXEMPLARY AUTO-SYNCHRONOUS ISOLATED INLET POWER CONVERTER CONFIGURATION

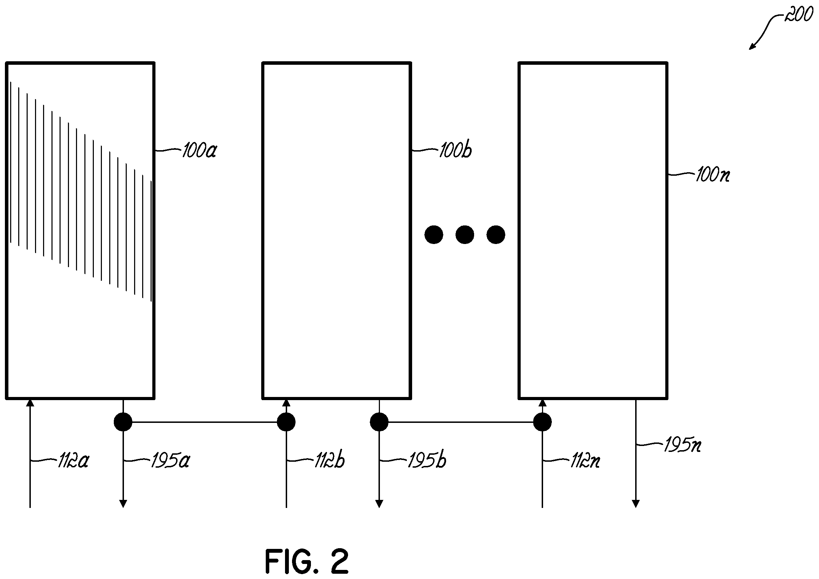

FIG. 2 illustrates a block diagram of an auto-synchronous isolated inlet power converter configuration according to an exemplary embodiment of the present disclosure. The auto-synchronous isolated inlet power converter configuration 200 represents an auto-synchronous isolated inlet power converter configuration that includes a plurality of auto-synchronous isolated inlet power converters 100(a-n) that may be daisy chained together to form the auto-synchronous isolated inlet power converter configuration 200, where n is an integer greater than or equal to two. Each power converter 100(a-n) that is added to the power converter configuration 200 may generate the output AC power 195n that is in parallel with the output AC power 195a and the output AC power 195b of the power converter configuration 200. The power converter configuration 200 shares many similar features with the power converter 100; therefore, only the differences between the power converter configuration 200 and the power converter 100 are to be discussed in further detail.

As noted above, the power converter 100a generates the output AC power 195a. However, the power converter 100a may be limited to a maximum output power level for the output AC power 195a. For example, if the power converter 100a is limited to the maximum output power level of 500 Watts (W) for the output AC power 195a, then regardless of the input power level of the input AC power 112a, the maximum output AC power 195a for the power converter 100a is 500W. However, if an individual desires to power a hair dryer that requires 1500W to operate, the power converter 100a cannot power the hair dryer because its maximum output AC power 195a is 500W.

However, additional power converters 100(b-n) may be daisy chained to the power converter 100a to parallel the output AC power 195a so that the overall output power of the power converter configuration 200 is increased. In daisy chaining the plurality of power converters 100(a-n), each power input for each power converter 100(b-n) is coupled to a power output 195(b-n) of an power converter 100(b-n) that is ahead of the power converter 100(b-n) in the daisy chain configuration. For example, the power input of the power converter 100b is coupled to the power output 195a of the power converter 100a so that the input AC power 112a received by the power converter 100b is substantially equivalent to the output AC power 195a of the power converter 100a. The power input 112n of the power converter 100n is coupled to the power output 195b of the power converter 100b so that the input AC power 112n received by the power converter 100n is substantially equivalent to the output AC power 195b of the power converter 100b.

After daisy chaining each of the plurality of power converters 100(a-n), each output AC power 195(a-n) may be paralleled with each input AC power 112a, 112b, and/or 112n to increase the overall output AC power of the power converter configuration 200. Each output AC power 195(a-n) may be paralleled with each input AC power 112a, 112a, and 112n so that the overall output AC power of the power converter configuration 200 may be used to power the external electronic device that the individual requests to operate, such as the hair dryer. The individual may access the overall output AC power by coupling the external electronic device that the individual requests to power, such as the hair dryer, into any of the power converters 100(a-n). The individual is not limited to coupling the external electronic device into the final power converter 100n in the power converter configuration 200 in order to access the overall output AC power. Rather, the individual may access the overall output AC power by coupling the external electronic device to any of the power converters 100(a-n) in the power converter configuration 200.

For example, if the maximum output AC power 195a for the power converter 100a is 500W, the maximum output power that can be generated by the power converter 100b is also 500W. The maximum output power that can be generated by the power converter 100n is also 500W. However, the power converter 100b is daisy chained to the power converter 100a and the power converter 100b is daisy chained to the power converter 100n. As a result, the external input AC power 112a, 112b, and 112n for each of the power converters 100(a-n) is in parallel with the output AC power 195a, 195b, and 195n for each of the power converters 100(a-n).

The output AC power 195a, 195b, and 195n for each of the power converters 100(a-n) is 500W. The power converter 100b generates the output AC power 195b of 500W in parallel with the input AC power 112b of 500W so that the output AC power 195b and/or the output AC power 195a is the paralleled AC output power of 1000W when the power converter 100b is daisy chained to the power converter 100a. The power converter 100n is then daisy chained to the power converters 100a and 100b so that the output AC power 195a, the output AC power 195b and/or the output AC power 195n is the paralleled AC output power of 1500W. Thus, the maximum output AC power for the power converter configuration 200 is 1500W. The maximum output AC power of 1500W is now sufficient to power the hair dryer that requires 1500W to operate.

The individual may plug the hair dryer into any of the power converters 100(a-n) in order to access the maximum output AC power of 1500W generated by the power converter configuration 200 to power the hair dryer. The individual is not limited to plugging the hair dryer into the power converter 100n simply because the power converter 100n is the last power converter in the daisy chain of the power converter configuration 200. The daisy chaining of each of the plurality of power converters 100(an) when the plurality of power converters 100(a-n) are not coupled to a power source but generating paralleled output AC power may be considered a standalone power converter micro grid.

Each of the power converters 100(a-n) included in the power converter configuration 200 may operate in a master/slave relationship with each other. The master may be the originator of the output AC power for the power converter configuration 200. The master may determine the power signal characteristics of the output AC power originated by the master in that each of the remaining slaves included in the power converter configuration 200 may be required to synchronize each of their own respective AC power output to the output AC power originated by the master. Each respective AC power output that is synchronized to the output AC power originated by the master may be paralleled with the output AC power for the master.

For example, if a gas powered electric generator is connected to the input AC power 112a, the gas generator becomes the master of the power converter configuration 200 when the gas generator is the originator of the input AC power 112a provided to the power converter 100a. The gas generator would determine the frequency and the voltage for the input AC power 112a. Each power converter 100(a-n) then become slaves and synchronize each of their respective output AC power 195(a-n) to have frequency and voltage within a threshold of 10% of the frequency and voltage of the input AC power 112a. Each output AC power 195(a-n) that includes frequency and voltage within the threshold of 10% of the frequency and voltage of the AC power 112a is synchronized with the input AC power 112a and is then paralleled with the input AC power 112a.

Each of the power converters (100a-n) may operate as a slave for the power converter configuration 200 when each of the power converters 100(a-n) is receiving input AC power. Each of the power converters 100(a-n) may operate as a master when each of the power converters 100(a-n) no longer receives input AC power. For example, each of the power converters 100(a-n) operate as the slave when the power converter configuration 200 is coupled to the gas generator so that the gas generator operates as the master for the power converter configuration 200. Each of the power converters 100(a-n) is receiving input AC power. The power converter 100a is receiving the input AC power 112a from the gas generator making the power converter 100a the slave. The power converter 100b receives the input AC power 112b from the power converter 100a making the power converter 100b the slave. Finally, the power converter 100n receives the input AC power 112n from the power converter 100b making the power converter 100n the slave.

In another example, the power converter 100a operates as the master for the power converter configuration 200 when the power converter configuration 200 is no longer coupled to the power source and the power converter 100a is generating the output AC power 195a. Each of the power converters 100(b-n) is receiving input AC power via the output AC power 195a internally generated by the master power converter 100a. The power converter 100b receives the input AC power 112b from the power converter 100a and the power converter 100n receives the input AC power 112n from the power converter 100b.

The power converter configuration 200 may automatically transition the master/slave designations between each of the power converters 100(a-n) without user intervention. As noted above, each of the power converters 100(a-n) may be designated as the master of the power converter configuration 200 when any of the power converters 100(a-n) no longer receive input AC power. However, the master power converter 100(a-n) may automatically transition to the slave when the master power converter 100(a-n) senses input AC power coming into the master power converter 100(a-n). At that point, the power converter 100(a-b) may automatically terminate the internal generation of its own output AC power from its own previously stored DC power. The power converter 100(a-n) may automatically synchronize to the power signal characteristics of the input AC power now being received by the power converter 100(an) to parallel the output AC power generated by each power converter 100(a-b) with input AC power. The power converter 100(a-n) is no longer a master and transitions to a slave and begins generating output AC power from the input AC power now being received by it.

For example, when the power converter 100b operates as a master it is not receiving input AC power but is internally generating its own output AC power 195b from its own previously stored DC power. The power converter 100b will continue to operate as the master until the power converter 100b senses input AC power 112b now being received by the power converter 100b. The power converter 100a is now coupled to the power converter 100b and is generating the input AC power 112b now being received by the power converter 100b. The power converter 100b then automatically terminates internally generating its own output AC power 195b from its own previously stored DC power. The power converter 100b automatically synchronizes the output AC power 195b to be within the threshold of the frequency and voltage of the input AC power 112b, which again is the output AC power 195a, now being received from the power converter 100a to parallel the output AC power 195b to the input AC power 112b. The power converter 100b then transitions to the slave when the power converter 100b generates the output AC power 195b from the input AC power 112b rather than its own previously stored DC power.

The power converter configuration 200 may also automatically transition the slave power converter 100(a-n) to a master without user intervention. As noted above, the power converter 100(a-n) may be designated as the slave of the power converter configuration 200 when the power converter 100(a-n) is receiving input AC power. However, the slave power converter 100(a-n) may automatically transition to the master when the slave power converter 100(a-n) no longer senses input AC power coming into the slave power converter 100(a-n). At that point, the power converter 100(a-n) may automatically begin internally generating its own output AC power from its own previously stored DC power. The power converter 100(a-n) may have stored the power signal characteristics of the input power previously received by the power converter 100(a-n). The power converter 100(a-n) may automatically synchronize its own output AC power to the input AC power no longer received by the power converter 100(a-n) based on the stored power signal characteristics to parallel the output AC power to the input AC power. The power converter 100(a-b) is no longer a slave and transitions to a master when the power converter 100(a-b) begins internally generating its own output AC power from its own previously stored DC power.

After the master-slave relationship is established between each of the master power converters 100(a-n), the paralleled output AC power of the master power converter configuration 200 may be maintained by the master power converter 100a and each of the slave power converters 100(b-n). The master power converter 100a may maintain the voltage of the paralleled output AC power while the slave power converters 100(b-n) provide the current to maintain the voltage of the paralleled output AC power at a reference voltage.

However, the voltage of the paralleled output AC power may decrease when the external electronic device the individual requests to power, such as the hair dryer, is coupled to at least one of the outputs for the power converters 100(a-n). Each of the slave power converters 100(b-n) may increase the current of the paralleled output AC power so that the voltage of the paralleled output AC power maintained by the master power converter 100a is increased back to the reference voltage sufficient to generate the paralleled output AC power. The reference voltage of the paralleled output AC power is the voltage level that is to be maintained to generate the paralleled output AC power that is sufficient to power the external electronic device. The reference voltage may be specified to be any voltage that is sufficient to maintain the paralleled output AC power that will be apparent to those skilled in the relevant art(s) without departing from the scope of the disclosure.

Each of the slave power converters 100(b-n) may continue to generate current sufficient to maintain the voltage of the paralleled output AC power at the reference voltage so that the external electronic device is powered by the paralleled output AC power. However, eventually each of the slave power converters 100(b-n) may have their DC sources depleted to the point where each of the slave power converters 100(b-n) no longer have current that is sufficient to maintain the voltage of the paralleled output AC power at the reference voltage sufficient to generate the paralleled output AC power. At that point, the master power converter 100a may begin to provide current to maintain the voltage of the paralleled output AC power at the reference voltage sufficient to generate the paralleled output AC power.

The power converter configuration 200 may continue to generate output AC power despite when the slave power converter 100(a-n) is no longer functional. The dysfunctional slave power converter 100(a-n) may continue to pass through the output AC power generated by the master power converter 100(a-n) to each of the other slave power converters 100(a-n). For example, the master power converter 100a acts as the master and the power converters 100(b-n) act as the slaves. If the slave power converter 100b fails and is no longer functional, the dysfunctional slave power converter 100b continues to pass through the output AC power 195a generated by the master power converter 100a to the functional slave power converter 100n so that the functional slave power converter power converter 100n continues to generate the output AC power 195n from the output AC power 195a.

### AN EXEMPLARY AUTO-SYNCHRONOUS ISOLATED INLET POWER CONVERTER

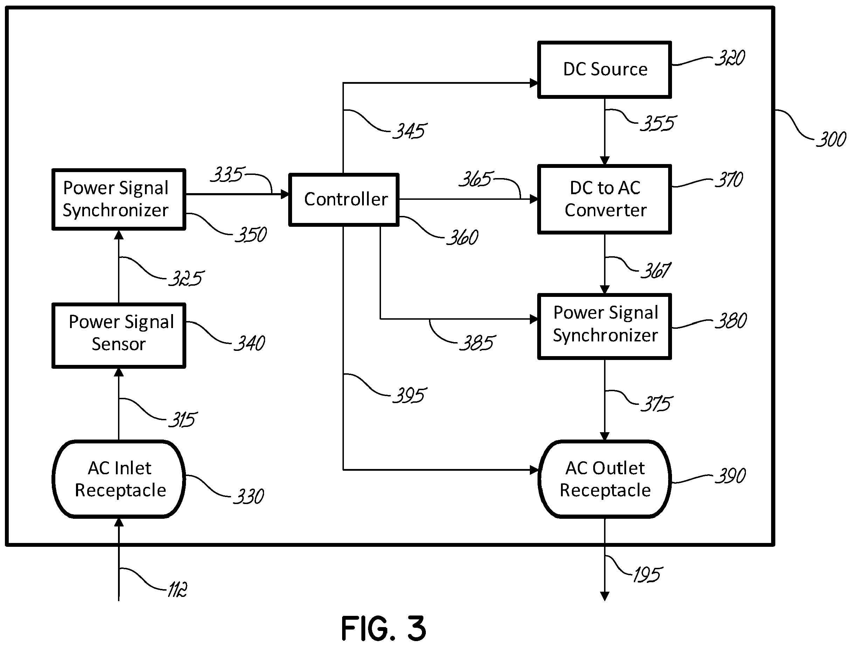

FIG. 3 is a block diagram of an exemplary auto-synchronous isolated inlet power converter 300 that may be used in the auto-synchronous isolated inlet power converter configuration 200 according to an exemplary embodiment of the present disclosure. Although, FIG. 3 depicts a block diagram of the power converter 300, one of ordinary skill in the art will recognize that FIG. 3 may also depict a block diagram of the functionality of the plurality of power converters 100(a-n) used in the power converter configuration 200 depicted in FIG. 2 and also the functionality of the power converter 100 depicted in FIG. 1. The power converter 300 may automatically transition to internally generating output AC power 195 based on the DC power 355 provided by the DC source 320 when the power signal sensor 340 no longer senses the received input AC power 315. The power converter 300 may also automatically transition to operating as a master when the power signal sensor 340 no longer senses the received input AC power 315. The power converter 300 may also automatically transition to operating as a slave when the power signal sensor 340 begins to sense the received input AC power 315.

The power converter 300 may be implemented using a DC source 320, an AC inlet receptacle 330, a power signal sensor 340, a power signal synchronizer 350, a controller 360, a DC to AC converter 370, a power signal synchronizer 380, and an AC outlet receptacle 390. Each of which are enclosed within a housing for the power converter 300. The power converter 300 shares many similar features with the power converter 100 and the plurality of power converters 100(a-n); therefore, only the differences between the power converter 300 and the power converter 100 and the plurality of power converters 100(a-n) are to be discussed in further detail.

The DC source 320 receives and stores DC power 355. The DC source 320 stores the DC power 355 until requested to provide the DC power 355. The DC power 355 provided by the DC source 320 may include low-voltage but high energy DC power. The DC source 320 may include one or more lithium ion phosphate (LiFePO₄) and/or one or more lead acid cells. However, this example is not limiting, those skilled in the relevant art(s) may implement the DC source 320 using any other DC source and/or other battery chemistries without departing from the scope of the present disclosure. The one or more cells of the DC source 320 convert chemical energy into electrical energy via an electromechanical reaction. The DC source 320 may be internal and/or external to the power converter 300 that will be apparent to those skilled in the relevant art(s) without departing from the scope of the disclosure.

As noted above, the power converter 300 may automatically transition between the master and/or slave designations without user intervention. The power converter 300 may be operating as a slave when the AC inlet receptacle 330 is receiving the external input AC power 112. The input AC power 112 may be AC power that is generated by the power source. The AC inlet receptacle 330 may receive the input AC power 112 when the AC inlet receptacle 330 is coupled to the power source. The input AC power 112 may also be AC power generated by a second power converter when the AC inlet receptacle 330 is coupled to the second power converter. The input AC power 112 may also be AC power generated by an AC power generator, AC power inverter, and/or any other type of AC power source independent from the power converter 300 that will be apparent to those skilled in the relevant art(s) without departing from the scope of the disclosure.

The AC inlet receptacle 330 may include a male configuration or a female configuration. In one embodiment, the AC inlet receptacle 330 may include a male configuration so that an individual cannot mistakenly plug an external electronic device into the AC inlet receptacle with the intent to power the external electronic device. Typically, external electronic devices include plugs in male configurations. The AC inlet receptacle 330 may be fused protected. The AC inlet receptacle 330 may be configured to receive the input AC power 112 in American, European, and/or any other power format that will be apparent to those skilled in the relevant art(s) without departing from the scope of the disclosure. The AC inlet receptacle 330 may include an Edison plug, any of the several International Electrotechnical Commission (IEC) plugs and/or any other type of plug that will be apparent to those skilled in the relevant art(s) without departing from the scope of the disclosure.

The AC inlet receptacle 330 may provide received input AC power 315 to a power signal sensor 340. The power signal sensor 340 may sense the power converter 300 is receiving the input AC power 112 through the AC inlet receptacle 330 based on the received input AC power 315 received from the AC inlet receptacle 330. After the power signal sensor 340 senses the received input AC power 315, the power signal sensor 340 generates an incoming AC power signal 325. The incoming AC power signal 325 provides information regarding power signal characteristics of the input AC power 112 that the power converter 300 is receiving through the AC inlet receptacle 330. The incoming AC power signal 325 may provide information regarding power signal characteristics of the input AC power 112 that includes but is not limited to frequency, phase, amplitude, current, voltage and/or any other characteristic of a power signal that will be apparent to those skilled in the relevant art(s) without departing from the scope of the disclosure.

The power signal sensor 340 provides the incoming AC power signal 325 to a power signal synchronizer 350. The power signal synchronizer 350 determines the power signal characteristics of the input AC power 112 that are provided by the incoming AC power signal 325. For example, the power signal synchronizer 350 determines the frequency, phase, amplitude, voltage and/or current of the input AC power 112. The power signal synchronizer 350 generates a synchronized input power signal 335 that provides the power signal characteristics of the input AC power 112 to a controller 360. In one embodiment, the power signal synchronizer 350 determines the power signal characteristics of the input AC power 112 by monitoring the voltage of the incoming AC power signal 325.

The power signal synchronizer 350 also synchronizes the converted AC power 367 that is generated by the DC to AC converter 370 with the power signal characteristics of the input AC power 112. The power signal synchronizer 350 determines whether the power signal characteristics of the input AC power 112 are within the threshold of the power signal characteristics of the converted AC power 367. The power signal synchronizer 350 synchronizes the input AC power 112 with the converted AC power 367 when the power signal characteristics of the input AC power 112 are within the threshold of the power signal characteristics of the converted AC power 367. The power signal synchronizer 350 refrains from synchronizing the input AC power 112 with the converted AC power 367 when the power signal characteristics of input AC power 112 are outside the threshold of the power signal characteristics of the converted AC power 367.

For example, the power signal synchronizer 350 determines whether the frequency and the voltage of the sinusoidal waveform included in the input AC power 112 are within a threshold of 10% from the frequency and the voltage of the sinusoidal waveform included in the converted AC power 367. The power signal synchronizer 350 synchronizes the input AC power 112 with the converted AC power 367 when the frequency and the voltage of the input AC power 112 are within the threshold of 10% from the frequency and the voltage of the converted AC power 367. The power signal synchronizer 350 refrains from synchronizing the input AC power 112 with the converted AC power 367 when the frequency and the voltage of the input AC power 112 are outside the threshold of 10% from the frequency and the voltage of the converted AC power 367.

The output AC power 195 includes the input AC power 112 in parallel with the converted AC power 367 when the converted AC power 367 is synchronized with the input AC power 112. For example, the power signal synchronizer 350 synchronizes the converted AC power 367 to operate at within the threshold of 10% from the frequency and voltage of the input AC power 112. In one embodiment, the input AC power 112 embodies a substantially pure sinusoidal waveform. The substantially pure sinusoidal waveform may represent an analog audio waveform with is substantially smooth and curved rather than a digital audio waveform that includes squared off edges. In such an embodiment, the power signal synchronizer 350 synchronizes the converted AC power 367 to be within a threshold of the pure sinusoidal waveform embodied by the input AC power 112. After the power signal synchronizer 350 synchronizes the converted AC power 367 to the power signal characteristics of the input AC power 112, the power signal synchronizer 350 notifies the controller 360 of the synchronization via the synchronized input power signal 335.

The controller 360 receives the synchronized input power signal 335. The controller 360 determines the power signal characteristics of the input AC power 112 and then stores the power signal characteristics in a memory included in the controller 360. For example, the controller 360 stores the frequency, phase, amplitude, voltage and/or current of the input AC power 112. After receiving the synchronized input power signal 335, the controller 360 is aware that the input AC power 112 is coupled to the AC inlet receptacle 330. In response to the input AC power 112 coupled to the AC inlet receptacle 330, the controller 360 stops generating a reference clock for the power converter 300 because the converted AC power 367 is now synchronized with the input AC power 112.

Also, in response to the input AC power 112 coupled to the AC inlet receptacle 330, the controller 360 also generates a DC source signal 345. The controller 360 instructs the DC source 320 via the DC source signal 345 to no longer provide the DC power 355 to the DC to AC inverter 370. The instruction by the controller 360 to the DC source 320 to no longer provide the DC power 355 to the DC to AC inverter 370 also terminates the output AC power 195 that is generated from the DC power 355.

Further, in response to the input AC power 112 coupled to the AC inlet receptacle 330, the controller 360 confirms that the power signal synchronizer 350 has synchronized the converted AC power 367 to the power signal characteristics of the input AC power 112. After confirming that the power signal synchronizer 350 has synchronized the converted AC power 367 to the power signal characteristics of the input AC power 112, the controller 360 links in parallel the input AC power 112 being received by the AC inlet receptacle 330 with the converted AC power 367 to the AC outlet receptacle 390 to generate the parallel AC power 395. The AC outlet receptacle 390 then outputs the output AC power 195 that includes the input AC power 112 in parallel with the converted AC power 367 with power signal characteristics that are within the threshold of the power signal characteristics of the input AC power 112. For example, the frequency and voltage of the output AC power 195 may be within the threshold of the frequency and voltage of the input AC power 112.

The controller 360 refrains from linking in parallel the input AC power 112 being received by the AC inlet receptacle 330 with the converted AC power 367 to the AC outlet receptacle 390 to generate the parallel AC power 395 when the input AC power 112 fails to synchronize with the converted AC power 367. Rather, the converted AC power 367 is simply provided to the AC outlet receptacle 390 so that the output AC power 195 is output AC power that includes the converted AC power 367 but does not include the input AC power 112 in parallel with the converted AC power 367.

The AC outlet receptacle 390 may include a male configuration or a female configuration. In one embodiment, the AC outlet receptacle 390 may include a female configuration so that an individual can easily plug an external electronic device into the AC outlet receptacle 390 with the intent to power the external electronic device. Typically, external electronic devices include plugs in male configurations. In another embodiment, the AC outlet receptacle 390 may include a configuration that is opposite that of the AC inlet receptacle 330. For example, the AC inlet receptacle 330 may include a male configuration while the AC outlet receptacle 390 includes a female configuration.

The AC outlet receptacle 390 may be fused protected. The AC outlet receptacle 390 may be configured to provide the output AC power 390 in American, European, and/or any other power format that will be apparent to those skilled in the relevant art(s) without departing from the spirit and scope of the disclosure. The AC outlet receptacle 390 may include an Edison plug, any of the several International Electrotechnical Commission (IEC) plugs and/or any other type of plug that will be apparent to those skilled in the relevant art(s) without departing from the spirit and scope of the disclosure.

As noted above, the power converter 300 may automatically transition between the master and/or slave designations without user intervention. The power converter 300 may automatically transition from operating as a slave to operating as a master when the AC input power signal 112 diminishes and is no longer received by the AC inlet receptacle 330. The controller 360 no longer receives the synchronized input power signal 335 providing information regarding the external input AC power 112. At that point, the controller 360 generates the DC source signal 345 to instruct the DC source 320 to begin generating the DC power 355. The controller 360 generates a power conversion signal 365 to instruct the DC to AC converter 370 to convert the DC power 355 to converted AC power 367. The converted AC power 367 is high-voltage output AC power. In one embodiment, the DC to AC converter 370 may use high frequency modulation in converting the DC power 355 to the converted AC power 367.

The controller 360 then provides a synchronized output power signal 385 to the power signal synchronizer 380. The synchronized output power signal 385 provides the power signal characteristics of the external input AC power 112 when the input power signal 112 was coupled to the AC inlet receptacle 330 to the power signal synchronizer 380. For example, the synchronized output power signal 385 provides the frequency, phase, amplitude, voltage and/or current of the input power signal 112 to the power signal synchronizer 380. The synchronized output power signal 385 also provides a reference clock to the power signal synchronizer 380.

The power signal synchronizer 380 then generates synchronized output AC power 375 by synchronizing the converted AC power 367 to the power signal characteristics of the input AC power 112 and the reference clock provided by the synchronized output power signal 385. In one embodiment, the input AC power 112 embodies a substantially pure sinusoidal waveform. In such an embodiment, the power signal synchronizer 380 synchronizes the converted AC power 367 to be within the threshold of the pure sinusoidal waveform embodied by the input AC power 112. The synchronized output AC power 375 includes power signal characteristics that are within the threshold of the power signal characteristics of the input AC power 112. For example, the synchronized output AC power 357 includes a frequency and voltage that is within the threshold of the frequency and voltage of the input AC power 112. The AC outlet receptacle 390 then generates the output AC power 195 based on the synchronized output power 375. Thus, the power converter 300 generates the output AC power 195 that is substantially similar to the input AC power 112 despite not receiving the input AC power 112 from other sources.

### AN EXEMPLARY AUTO-SYNCHRONOUS ISOLATED INLET POWER CONVERTER

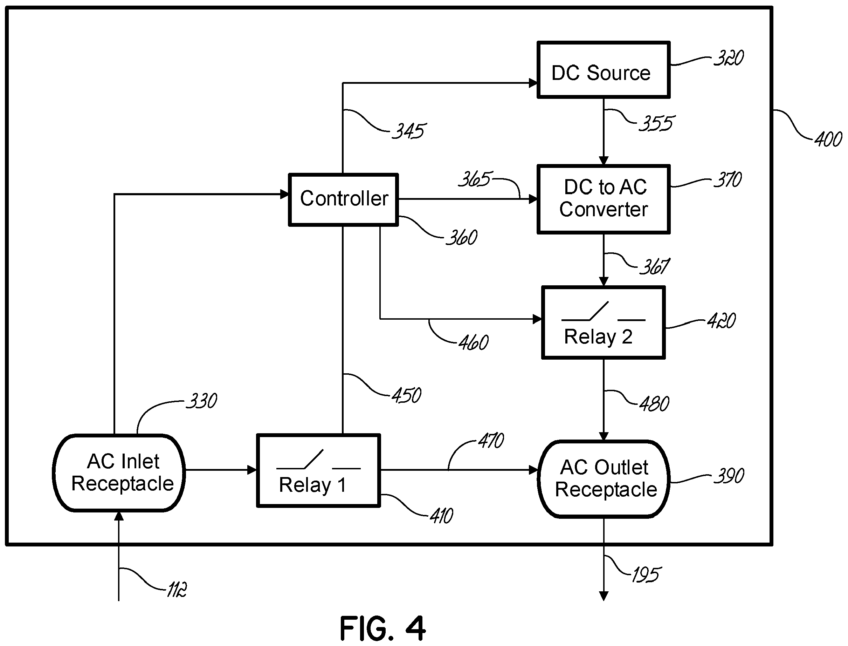

FIG. 4 is a block diagram of an exemplary auto-synchronous isolated inlet power converter 400 that may be used in the auto-synchronous isolated inlet power converter configuration 200 according to an exemplary embodiment of the present disclosure. Although, FIG. 4 depicts a block diagram of the power converter 400, one of ordinary skill in the art will recognize that FIG. 4 may also depict a block diagram of the plurality of power converters 100(a-n) used in the power converter configuration 200 depicted in FIG. 2 and also the power converter 100 depicted in FIG. 1. One of ordinary skill in the art will also recognize that features depicted in the block diagram of the power converter 300 may also be included in the power converter 400 but have been omitted for clarity.

The power converter 400 may automatically transition from operating as a master and operating as a slave without user intervention based on a relay configuration. The transitioning of the relay configuration may automatically transition the power converter 400 between operating as a master and operating as a slave without user intervention. The power converter 400 may be implemented using the DC source 320, the AC inlet receptacle 330, the controller 360, the DC to AC converter 370, the AC outlet receptacle 390, a first relay 410 and a second relay 420. Each of which are enclosed within a housing for the power converter 400. The power converter 400 shares many similar features with the power converter 100, the plurality of power converters 100(a-n), and the power converter 300; therefore, only the differences between the power converter 400 and the power converter 100, the plurality of power converters 100(a-n), and the power converter 300 are to be discussed in further detail.

As noted above, the power converter 400 operates as a slave when the controller 360 senses that the input AC power 112 is coupled to the AC inlet receptacle 330. The controller 360 then terminates the generation of the output AC power 195. The power converter 400 operates as a master when the controller 360 no longer senses that the input AC power 112 is coupled to the AC inlet receptacle 330. The controller 360 then instructs the DC source 320 and the DC to AC inverter 370 to begin generating the output AC power 195. The relay configuration that includes a first relay 410 and a second relay 420 transitions the power converter 400 between the master and slave modes based on the logic provided in Table 1. The relay configuration that includes the first relay 410 and the second relay 420 may include but is not limited to a metal-oxide-semiconductor field-effect transistor (MOSFET), a transistor, an insulated-gate bipolar transistor (IGBT), a solid-state switch, a solid state relay, spring loaded relay switches and/or any other relay and/or combination of relays that will be apparent to those skilled in the relevant art(s) without departing from the spirit and scope of the disclosure.

**Table 1**

| | | |
|---|---|---|
| Master Mode | Relay 1 Open | Relay 2 Closed |
| Slave Mode | Relay 1 Closed | Relay 2 Closed |
| Unit Power Off (Bypassed) | Relay 1 Closed | Relay 2 Open |

When automatically transitioning from the slave mode to the master mode, the controller 360 no longer senses the input AC power 112 coupled to the AC inlet receptacle 330. At this point, the controller 360 generates a first relay signal 450 that instructs the first relay 410 transition to the open state (logic 0). The controller 360 also generates a second relay signal 460 that instructs the second relay 420 to transition to the closed state (logic 1). The controller 360 also generates DC source signal 345 that instructs the DC source 320 to begin providing the DC power 355 to the DC to AC converter 370 to generate the converted AC power 367. Because the second relay 420 is in the closed position (logic 1), the converted AC power 367 passes through the second relay 420 onto the AC outlet receptacle 390 so that the power converter 400 provides the output AC power 195 generated from the DC power 355 rather than the input AC power 112. The open state (logic 0) of the first relay 410 prevents any remaining input AC power 112 from passing through to the AC output receptacle 390 when the power converter 400 is generating the output AC power 195 as operating as the master. As a result, the AC inlet receptacle 330 may be isolated from the AC outlet receptacle 390.

Once the controller 360 senses the input AC power 112 coupled to the AC inlet receptacle 330, the controller 360 automatically generates the power conversion signal 365 to instruct the DC to AC converter 370 to no longer provide the converted AC power 367 so that the power converter 400 no longer generates the output AC power 195. The controller 360 also automatically generates the second relay signal 460 to instruct the second relay 420 to transition to the open state (logic 0). The controller 360 also generates the first relay signal 450 to instruct the first relay 410 to transition to the closed state (logic 1). After the second relay 420 transitions to the open state (logic 0) and the first relay 410 transitions to the closed state (logic 1), any input AC power 112 coupled to the AC inlet receptacle 330 passes through the power converter 400 to the AC outlet receptacle 390 so that the power converter 400 generates the output AC power 195.

However, the second relay 420 is still in the open state (logic 0). The controller 360 is not going to instruct the second relay 420 to transition into the closed state (logic 1) until the controller 360 has successfully synchronized the power converter 400 to the input AC power 112 coupled to the AC inlet receptacle 330. After the controller 360 properly synchronizes the power converter 400 to the input AC power 112, then the controller 360 generates the second relay signal 460 to instruct the second relay 420 to transition from the open state (logic 0) to the closed state (logic 1). After the second relay 420 transitions from the open state (logic 0) to the closed state (logic 1), then the power converter 400 is generating output AC power 195 that includes the converted AC power 367 that is in parallel to the input AC power 112.

The power converter 400 also operates in a bypass mode. In the bypass mode, the power converter 400 is powered off and is no longer functioning. In embodiment, the controller 360 generates the first relay signal 450 and instructs the first relay 410 to transition into the closed state (logic 1). The controller 360 also generates the second relay signal 460 and instructs the second relay 420 to transition into the open state (logic 0). In another embodiment, the first relay 410 and the second relay 420 are spring loaded relay switches. When the power converter 400 powers off, the electromagnetic coil of the first relay 410 is no longer energized so the spring pulls the contacts in the first relay 410 into the up position. The closing of the first relay 410 and the opening of the second relay 420 causes the power converter 400 to be a pass through where the input AC power 112 passes through the power converter 400 and onto a second power converter daisy chained to the power converter 400 and/or to an external electronic device being powered by the external input AC power 112. Thus, additional power converters and/or external electronic devices down the line from the dysfunctional power converter 400 continue to operate off of the external input AC power 112. The first relay 410 and the second relay 420 may be implemented may be implemented in hardware, firmware, software, or any combination thereof that will be apparent to those skilled in the relevant art(s) without departing from the spirit and scope of the disclosure.

### A SECOND EXAMPLARY AUTO-SYNCHRONOUS ISOLATED INLET POWER CONVERTER CONFIGURATION

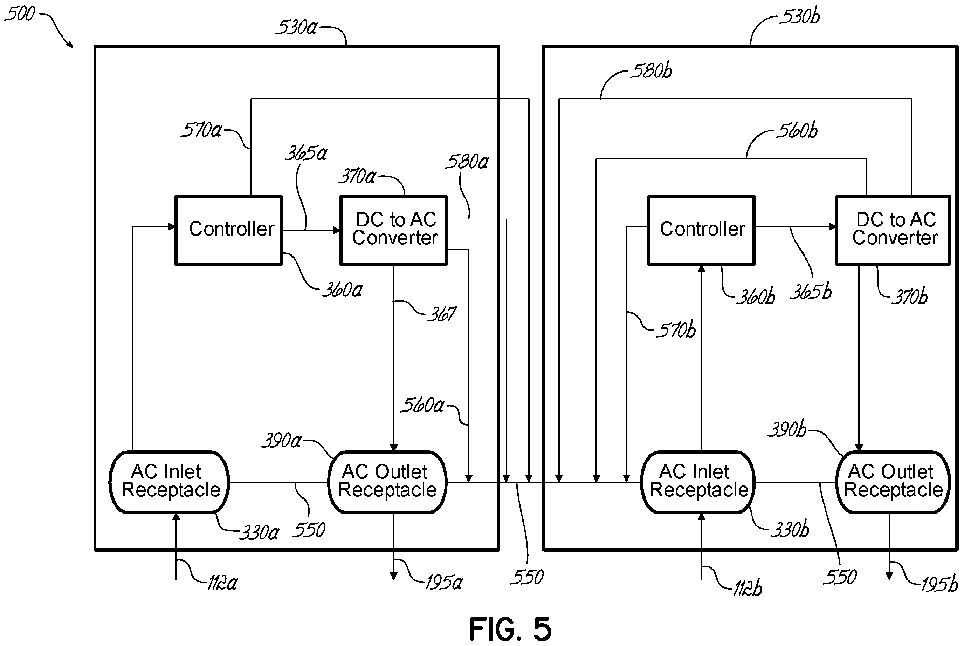

FIG. 5 is a block diagram of an exemplary auto-synchronous isolated inlet power converter configuration 500 according to an exemplary embodiment of the present disclosure. Although, FIG. 5 depicts a block diagram of the auto-synchronous isolated inlet power converter configuration 500, one of ordinary skill in the art will recognize that FIG. 5 may also depict a block diagram of the plurality of auto-synchronous isolated inlet power converters 100(a-n) used in the auto-synchronous isolated inlet power converter configuration 200 depicted in FIG. 2 and also the auto-synchronous isolated inlet power converter 100 depicted in FIG. 1. One of ordinary skill in the art will also recognize that features depicted in the block diagram of the auto-synchronous isolated inlet power converter 300 and 400 may also be included in the auto-synchronous isolated inlet power converters 530a and 530b but have been omitted for clarity.

The power converter configuration 500 may be implemented using the master power converter 530a and the slave power converter 530b. The master power converter 530a includes a master AC inlet receptacle 330a, a master AC outlet receptacle 390a, a master controller 360a, and a master DC to AC converter 370a. The slave power converter 530b includes a slave AC inlet receptacle 330b, a slave AC outlet receptacle 390b, a slave controller 360b, and a slave DC to AC converter 370b. The master power converter 530a and the slave power converter 530b are coupled together by the AC bus 550. The master power converter 530a and the slave power converter 530b share many similar features with the power converter 100, the plurality of power converters 100(a-n), the power converter 300, and the power converter 400; therefore, only the differences between the power converter configuration 500 and the power converter 100, the plurality of power converters 100(a-n), the power converter 300, and the power converter 400 are to be discussed in further detail.

For discussion purposes, the power converter 530a operates as the master and the power converter 530b operates as the slave. However, as discussed in detail above, the power converters 530a and 530b may operate as either the master or slave depending on whether input AC power is applied to the respective AC inlet receptacle of each. The master power converter 530a may apply a constant voltage to an AC bus 550 that is the coupling the AC inlet receptacle 330a and the AC outlet receptacle 390a of the master power converter 530a to the AC inlet receptacle 330b and the AC outlet receptacle 390b of the slave power converter 530b to maintain the paralleled output AC power generated by the power converter configuration 500. The slave power converter 530b may increase the current applied to the AC bus 550 when the voltage of the AC bus 550 decreases below the reference voltage due to an external electronic device being coupled to the power converter configuration 500. The slave power converter 530b may increase the current applied to the AC bus 550 so that the voltage of the AC bus 550 is increased back to the reference voltage so that the paralleled output AC power is maintained to adequately power the external electronic device.

After the master power converter 530a has synchronized with the slave power converter 530b, the external input AC power 112a is in parallel with the output AC power 195a and the output AC power 195b generating the paralleled output AC power. The paralleled output AC power may be accessed by coupling the external electronic device to the master AC outlet receptacle 390a and/or the slave AC outlet receptacle 390b. The AC bus 550 may provide an access point to the paralleled output AC power for the master controller 360a and the slave controller 360b to monitor.

The master controller 360a may initially instruct the master DC to AC converter 370a with a master power conversion signal 365a to provide a constant master voltage 560a to the AC bus 550 to maintain the paralleled output AC power at a specified level. The specified level may be the maximum output AC power that may be generated by the power converter configuration 500 with the external input AC power 112a in parallel with the output AC power 195a and the output AC power 195b. However, the specified level may be lowered based on the constant master voltage 560a supplied by the master DC to AC converter 370a to the AC bus 550. The specified level may be associated with the reference voltage of the paralleled output AC power. As noted above, the reference voltage of the paralleled output AC power is the voltage level that is to be maintained to generate the paralleled output AC power that is sufficient to power the external electronic device.

After an external electronic device is coupled to the master AC outlet receptacle 390a and/or the slave AC outlet receptacle 390b, the paralleled output AC power may temporarily decrease due to the load applied to the AC bus 550 by the external electronic device. The slave controller 360b may monitor the AC bus 550 with a slave AC bus monitoring signal 570b to monitor the voltage of the AC bus 550 to determine whether the voltage has decreased below the reference voltage of the AC bus 550 which in turn indicates that the paralleled output AC power has decreased below the specified level. The slave controller 360b may then instruct the slave DC to AC converter 370b with a slave power conversion signal 365b to increase the slave current 580b that is provided to the AC bus 550 when the slave controller 360b determines that the voltage of the AC bus 550 decreases after the external electronic device is coupled to the master AC outlet receptacle 390a and/or the slave AC outlet receptacle 390b. The slave current 580b may be increased to a level sufficient to increase the voltage of the AC bus 550 back to the reference voltage. Increasing the voltage of the AC bus 550 back to the reference voltage also increases the paralleled output AC power so that the paralleled output AC power is reinstated to the specified level with a minimal lapse in time. The maintaining of the paralleled output AC power at the specified level prevents a delay in the powering of the external electronic device.

The slave controller 360b may continue to monitor voltage of the AC bus 550 with the slave AC bus monitoring signal 570b to ensure that the voltage of the AC bus 550 does not decrease below the reference voltage. The slave controller 360b may continue to instruct the slave DC to AC converter 370b with the slave power conversion signal 365b to increase or decrease the slave current 580b accordingly based on the voltage of the AC bus 550 to maintain the paralleled output AC power at the specified level.

The slave DC to AC converter 370b may continue to provide the slave current 580b to the AC bus 550 until the slave DC to AC converter 370b no longer has the capability to provide the slave current 580b at the level necessary to maintain the voltage of the AC bus 550 at the reference voltage. For example, the slave DC to AC converter 370b may continue to provide the slave current 580b to the AC bus 550 until the DC source of the slave power converter 530b is drained to the point where the slave DC to AC converter 370b can no longer provide the slave current 580b at the level sufficient to maintain the voltage of the AC buss 550 at the reference voltage.

The master controller 360b also monitors the AC bus 550 with a master AC bus monitoring signal 570a. The master controller 360b monitors the AC bus 550 to determine when the voltage of the AC bus 550 decreases below the reference voltage for a period of time and is not increased back to the reference voltage. At that point, the master controller 360a may recognize that the slave DC to AC converter 370b is no longer generating slave current 580b at the level sufficient to maintain the voltage of the AC bus 550 at the reference voltage. The master controller 360a may then instruct the master DC to AC converter 370a with the master power conversion signal 365a to increase the master current 580a to a level sufficient to increase the voltage of the AC bus 550 back to the reference voltage so that the paralleled output AC power may be maintained at the specified level. As a result, a delay in the powering of the external electronic device may be minimized despite the draining of the DC souce of the slave power converter 530b.

### AN EXEMPLARY AUTO-SYNCHRONOUS ISOLATED INLET POWER CONVERTER

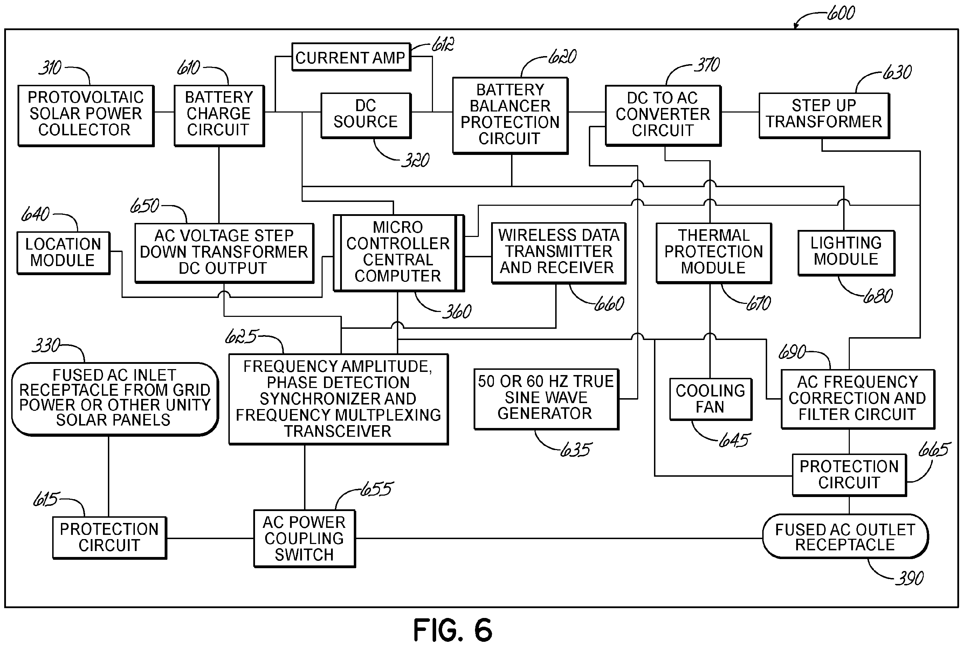

FIG. 6 is a block diagram of an exemplary auto-synchronous isolated inlet power converter 600 that may be used in the auto-synchronous isolated inlet power converter configuration 200 according to an exemplary embodiment of the present disclosure. Although, FIG. 6 depicts a block diagram of the auto-synchronous isolated inlet power converter 600, one of ordinary skill in the art will recognize that FIG. 6 may also depict a block diagram of the plurality of auto-synchronous isolated inlet power converters 100(an) used in the auto-synchronous isolated inlet power converter configuration 200 depicted in FIG. 2, and the auto-synchronous isolated inlet power converter 100 depicted in FIG. 1. One of ordinary skill in the art will also recognize that features depicted in the block diagram of the auto-synchronous isolated inlet power converter 300, 400, 530a, and 530b may also be included in the auto-synchronous isolated inlet power converter 600 but have been omitted for clarity.

The power converter 600 may be implemented using a battery charge circuit 610, a current amplifier 612, the DC source 320, a battery balancer protection circuit 620, a step transformer 630, a location module 640, an AC voltage step down transformer DC output 650, a wireless data transmitter and receiver 660, a thermal protection module 670, an integrated light source module 680, an AC frequency correction and filter circuit 690, a protection circuit 615, the AC inlet receptacle 330, the controller 360, the DC to AC converter 370, a frequency, amplitude, phase detection synchronizer and frequency multiplexing transceiver 625, a 50 or 60 Hertz (Hz) true sine wave generator 635, a cooling fan 645, a protection circuit 665, an AC power coupling switch 655 and the AC outlet receptacle 390. The power converter 600 shares many similar features with the power converter 100, the plurality of power converters 100(a-n), the power converter 300, the power converter 400, and the power converters 530a and 530b; therefore, only the differences between the power converter 600 and the power converter 100, the plurality of power converters 100(a-n), the power converter 300, the power converter 400, and the power converters 530a and 530b are to be discussed in further detail.

The battery charge circuit 610 may include passive and/or active circuitry as well as integrated circuits to control and/or regulate the charging of the DC source 320 included within the power converter 600. The battery charge circuit 610 may have bidirectional communication with a computing device, such as controller 360. The controller 360 may also control the battery charge circuit 610. The current amplifier 612 may increase the output current of the power converter and assist in charging the DC source 320.

The battery balancer protection circuit 620 is disposed within the housing of the power converter 600. The battery balancer protection circuit 620 may include passive and/or active circuitry as well as integrated circuits that may be controlled by the controller 360. The battery balancer protection circuit 620 may be used to ensure safe discharge and recharge of the individual cells within the DC source 320.

The power converter 600 may further include a location module 640. The location module 640 may include one or several location sensors such as, but not limited to, a global positioning system (GPS), a compass, a gyroscope, an altimeter, and/or any other location sensor digital media file that will be apparent to those skilled in the relevant art(s) without departing from the spirit and scope of the disclosure. The location module 640 may be used to send data to the controller 360 through the wireless data transmitter and receiver 660 to an external personal computing device.

The AC voltage step down transformer 650 is included in the power converter 600. The step down transformer 650 may be used to charge the DC source 320 from the AC inlet receptacle 330 through the battery charge circuit 610. The step down transformer 650 may include iron, steel, ferrite or any other materials and fashioned specifically to satisfy power requirements for charging the DC source 320. The step down transformer 650 may also have a filtered DC output.

As discussed above, the power converter 600 includes a computing device such as the controller 360. The controller 360 may be used to control and/or monitor the power converter 600. The controller 360 may be a single or multiple processor based and may be able to receive software and/or firmware updates wirelessly through the associated wireless data transmitter and receiver 660 or through a hardware connection such as the frequency multiplexing transceiver 625. The controller 360 may be connected to any part of the power converter 600 for central control, remote control, general monitoring, and/or data collection purposes. The wireless data transmitter and receiver 660 may use Bluetooth, Wi-Fi, cellular, and/or any other acceptable radio frequency data transmissions and reception techniques that will be apparent to those skilled in the relevant art(s) without departing from the scope of the disclosure. The transmitter and receiver 660 may be used to transmit data from the power converter 600 to one or more external personal computing devices.

The power converter 600 includes a thermal protection module 670. The thermal protection module 670 includes one or more sensors positioned in one or more locations throughout any part of the power converter 600 for the purpose of temperature monitoring. The thermal protection module 670 is connected to the controller 360 and may be used to transmit data from the power converter 600 to external personal computing devices.

As shown, the power converter 600 may include the integrated light source 680. The integrated light source 680 may include one or more integrated lights inside or disposed on an exterior surface of the housing of the power converter 600 and may be used as a light source. The integrated lights may vary in color, intensity, color temperature size, frequency, and/or brightness. The integrated light source 680 may be coupled to the controller 660. The integrated light source 680 may be used to transmit data from the power converter 600 to external personal computing devices.

The power converter 600 further includes a grid frequency, amplitude, power phase detection synchronizer and frequency multiplexing transceiver 625, which may synchronize multiple AC power sources and transmit data between one or more power converters 600 via a standard AC power line.

The power converter 600 further includes a frequency generator, such as a true sine wave generator 635, such as a 50 Hz or 60 Hz true sine wave generator 635. The frequency generator may be other types of generators configured to output a signal at a particular reference frequency. The sine wave generator 635 may provide a sine wave reference to the DC to AC converter 370. The sine wave generator 635 may be coupled to the controller 360 as well as the grid frequency, amplitude, power phase detection synchronizer and frequency multiplexing transceiver 625. Moreover, the sine wave generator 635 may include analog and/or digital circuitry.

The power converter 600 may further include a cooling fan 645 disposed within the housing of the power converter 600. The cooling fan 645 may include one or more cooling fans arranged in a way that best ventilates an interior at least partially formed by the housing of the power converter 600 in which one or more components are disposed. The cooling fan 645 may be coupled to the thermal protection module 670 and/or the controller 360.

Furthermore, the power converter 600 includes an AC frequency correction and filter circuit 690. The frequency correction and filter circuit 690 may be controlled by the controller 360 through the 50 Hz or 60 Hz true sine wave generator 635. In addition, the frequency correction and filter circuit 590 may receive AC power from the step up transformer 630 and may output corrected and filtered AC power to a protection circuit 615 of the power converter 600. The protection circuit 615 provides surge and fuse protection and may be controlled and monitored by the controller 360.

Moreover, the power converter 600 an AC coupling switch 655 that is configured to couple the AC power from the AC inlet receptacle 330 with AC grid equivalent power generated by the power converter 600 such that synchronized AC power from the AC inlet receptacle 330 and the power converter 600 are coupled together for output from the AC outlet receptacle 390. The AC coupling switch 655 may be controlled by the controller 360 in conjunction with the grid frequency, amplitude, power phase detection synchronizer and frequency multiplexing transceiver 625.

### CONCLUSION

It is to be appreciated that the Detailed Description section, and not the Abstract section, is intended to be used to interpret the claims. The Abstract section may set forth one or more, but not all exemplary embodiments, of the present disclosure, and thus, are not intended to limit the present disclosure and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made without departing from the scope of the present disclosure. Thus the present disclosure should not be limited by any of the above-described exemplary embodiments, but should be defined only in accordance with the following claims.

## Claims

1. A auto-synchronous isolated inlet power converter configuration, comprising:
a first auto-synchronous isolated inlet power converter included in a plurality of auto-synchronous isolated inlet power converters configured to:
automatically generate first output alternating current (AC) power (195a) for the first auto-synchronous isolated inlet power converter (100a) when the first auto-synchronous isolated inlet power converter fails to detect first external input AC power (112a) coupled to the first auto-synchronous isolated inlet power converter, wherein the first output AC power is output AC power generated from DC power of the first auto-synchronous isolated inlet power converter and is not in parallel with the first external input AC power, and
act as a master auto-synchronous isolated inlet power converter when the first auto-synchronous isolated inlet power converter fails to detect the first external input AC power coupled to the first auto-synchronous isolated inlet power converter, wherein the master auto-synchronous isolated inlet power converter automatically provides the first output AC power to a slave auto-synchronous isolated inlet power converter included in the plurality of auto-synchronous isolated inlet power converters; and
a second auto-synchronous isolated inlet power converter included in the plurality of auto-synchronous isolated inlet power converters configured to:
automatically transition into generating second paralleled output AC power, wherein the second paralleled output AC power is second output AC power generated by the second auto-synchronous isolated inlet power converter that is in parallel with the first output AC power generated by the first auto-synchronous isolated inlet power converter, and
act as the slave auto-synchronous isolated inlet power converter when the second auto-synchronous isolated inlet power converter detects the first output AC power provided by the first auto-synchronous isolated inlet power converter.

2. The auto-synchronous isolated inlet power converter configuration of claim 1, wherein the first output AC power is synchronized with the second output AC power.

3. The auto-synchronous isolated inlet power converter configuration of claim 2, wherein a plurality of power characteristics associated with the first output AC power is substantially equivalent to a plurality of power characteristics associated with the second output AC power.

4. The auto-synchronous isolated inlet power converter configuration of claim 3, wherein the first output AC power includes a sinusoidal wave that is within a threshold of the sinusoidal wave included in the second output AC power.

5. The auto-synchronous isolated inlet power converter configuration of claim 4, wherein the first auto-synchronous isolated inlet power converter is further configured to:
automatically transition to generating first paralleled output AC power, when the first auto-synchronous isolated inlet power converter detects the first external input AC power coupled to the first auto-synchronous isolated inlet power converter and the first output AC power is synchronized with the first external input AC power, wherein the first auto-synchronous isolated inlet power converter is acting as the slave auto-synchronous isolated inlet power converter.

6. The auto-synchronous isolated inlet power converter configuration of claim 5, wherein the second auto-synchronous isolated inlet power converter is further configured to:
automatically generate the second output AC power for the second auto-synchronous isolated inlet power converter when the second auto-synchronous isolated inlet power converter fails to detect the first output AC power coupled to the second auto-synchronous isolated inlet power converter, wherein the second auto-synchronous isolated inlet power converter is acting as the master auto-synchronous isolated inlet power converter.

7. The auto-synchronous isolated inlet power converter configuration of claim 1, wherein the master auto-synchronous isolated inlet power converter is further configured to provide a constant voltage to an AC bus to maintain the second paralleled output AC power at a power level, wherein the AC bus couples the master auto-synchronous isolated inlet power converter to the slave auto-synchronous isolated inlet power converter.

8. The auto-synchronous isolated inlet power converter configuration of claim 7, wherein the slave auto-synchronous isolated inlet power converter is further configured to provide an increase in slave current to the AC bus when a voltage associated with the AC bus decreases below a reference voltage to increase the voltage to be substantially equivalent with the reference voltage, wherein the reference voltage is a voltage level associated with the second paralleled output AC power to maintain the second paralleled output AC power at the power level.

9. The auto-synchronous isolated inlet power converter configuration of claim 8, wherein the slave auto-synchronous isolated inlet power converter is further configured to provide the increase in the slave current to the AC bus until the slave auto-synchronous isolated inlet power converter is not capable of generating the slave current at a current level sufficient to maintain the voltage of the AC bus to be substantially equivalent to the reference voltage.

10. The auto-synchronous isolated inlet power converter configuration of claim 9, wherein the master auto-synchronous isolated inlet power converter is further configured to provide an increase in master current to the AC bus when the slave auto-synchronous isolated inlet power converter is not capable of generating the slave current at the current level sufficient to maintain the voltage of the AC bus to be substantially equivalent to the reference voltage.

## Patentansprüche

1. Autosynchrone isolierte Einlassleistungswandler-Konfiguration, die Folgendes umfasst:
einen ersten autosynchronen isolierten Einlassleistungswandler, der in einer Vielzahl von autosynchronen isolierten Einlassleistungswandlern eingeschlossen ist, der zu Folgendem konfiguriert ist:
automatisch eine erste Wechselstrom- (WS-) Ausgangsleistung (195a) für den ersten autosynchronen isolierten Einlassleistungswandler (100a) zu erzeugen, wenn es dem ersten autosynchronen isolierten Einlassleistungswandler nicht gelingt, eine erste externe WS-Eingangsleistung (112a), die mit dem ersten autosynchronen isolierten Einlassleistungswandler verbunden ist, zu erfassen, wobei die erste WS-Ausgangsleistung eine aus GS-Leistung des ersten autosynchronen isolierten Einlassleistungswandlers erzeugte WS-Ausgangsleistung ist und nicht parallel zu der ersten externen WS-Eingangsleistung ist, und
als ein autosynchroner isolierter Haupt-Einlassleistungswandler zu agieren, wenn es dem ersten autosynchronen isolierten Einlassleistungswandler nicht gelingt, die erste externe WS-Eingangsleistung, die mit dem ersten autosynchronen isolierten Einlassleistungswandler verbunden ist, zu erfassen, wobei der autosynchrone isolierte Haupt-Einlassleistungswandler die erste WS-Ausgangsleistung automatisch für einen autosynchronen isolierten Neben-Einlassleistungswandler bereitstellt, der in der Vielzahl von autosynchronen isolierten Einlassleistungswandlern eingeschlossen ist, und
einen zweiten autosynchronen isolierten Einlassleistungswandler, der in der Vielzahl von autosynchronen isolierten Einlassleistungswandlern eingeschlossen ist, der zu Folgendem konfiguriert ist:
automatisch überzugehen zum Erzeugen einer zweiten parallelgeschalteten WS-Ausgangsleistung, wobei die zweite parallelgeschaltete WS-Ausgangsleistung eine durch den zweiten autosynchronen isolierten Einlassleistungswandler erzeugte zweite WS-Ausgangsleistung ist, die parallel zu der durch den ersten autosynchronen isolierten Einlassleistungswandler erzeugten ersten WS-Ausgangsleistung ist, und
als der autosynchrone isolierte Neben-Einlassleistungswandler zu agieren, wenn der zweite autosynchrone isolierte Einlassleistungswandler die durch den ersten autosynchronen isolierten Einlassleistungswandler bereitgestellte erste WS-Ausgangsleistung erfasst.

2. Autosynchrone isolierte Einlassleistungswandler-Konfiguration nach Anspruch 1, wobei die erste WS-Ausgangsleistung mit der zweiten WS-Ausgangsleistung synchronisiert ist.

3. Autosynchrone isolierte Einlassleistungswandler-Konfiguration nach Anspruch 2, wobei eine Vielzahl von Leistungscharakteristika, die mit der ersten WS-Ausgangsleistung verknüpft ist, im Wesentlichen äquivalent zu einer Vielzahl von Leistungscharakteristika ist, die mit der WS-Ausgangsleistung verknüpft ist.

4. Autosynchrone isolierte Einlassleistungswandler-Konfiguration nach Anspruch 3, wobei die erste WS-Ausgangsleistung eine sinusförmige Welle einschließt, die innerhalb eines Schwellenwertes der sinusförmigen Welle liegt, die in der zweiten WS-Ausgangsleistung eingeschlossen ist.

5. Autosynchrone isolierte Einlassleistungswandler-Konfiguration nach Anspruch 4, wobei der erste autosynchrone isolierte Einlassleistungswandler ferner zu Folgendem konfiguriert ist:
automatisch überzugehen zum Erzeugen einer ersten parallelgeschalteten WS-Ausgangsleistung, wenn der erste autosynchrone isolierte Einlassleistungswandler die erste externe WS-Eingangsleistung erfasst, die mit dem ersten autosynchronen isolierten Einlassleistungswandler verbunden ist, und die erste WS-Ausgangsleistung mit der ersten externen WS-Eingangsleistung synchronisiert ist, wobei der erste autosynchrone isolierte Einlassleistungswandler als der autosynchrone isolierte Neben-Einlassleistungswandler agiert.

6. Autosynchrone isolierte Einlassleistungswandler-Konfiguration nach Anspruch 5, wobei der zweite autosynchrone isolierte Einlassleistungswandler ferner zu Folgendem konfiguriert ist:
automatisch die zweite WS-Ausgangsleistung für den zweiten autosynchronen isolierten Einlassleistungswandler zu erzeugen, wenn es dem zweiten autosynchronen isolierten Einlassleistungswandler nicht gelingt, die erste WS-Ausgangsleistung, die mit dem zweiten autosynchronen isolierten Einlassleistungswandler verbunden ist, zu erfassen, wobei der zweite autosynchrone isolierte Einlassleistungswandler als der autosynchrone isolierte Haupt-Einlassleistungswandler agiert.

7. Autosynchrone isolierte Einlassleistungswandler-Konfiguration nach Anspruch 1, wobei der autosynchrone isolierte Haupt-Einlassleistungswandler ferner dafür konfiguriert ist, eine konstante Spannung für eine WS-Sammelschiene bereitzustellen, um die zweite parallelgeschaltete WS-Ausgangsleistung bei einem Leistungspegel zu halten, wobei die WS-Sammelschiene den autosynchronen isolierten Haupt-Einlassleistungswandler mit dem autosynchronen isolierten Neben-Einlassleistungswandler verbindet.

8. Autosynchrone isolierte Einlassleistungswandler-Konfiguration nach Anspruch 7, wobei der autosynchrone isolierte Neben-Einlassleistungswandler ferner dafür konfiguriert ist, eine Steigerung beim Nebenstrom zur WS-Sammelschiene bereitzustellen, wenn eine mit der WS-Sammelschiene verknüpfte Spannung unter eine Referenzspannung abnimmt, um die Spannung zu steigern, so dass sie im Wesentlichen äquivalent zur Referenzspannung ist, wobei die Referenzspannung ein Spannungspegel ist, der mit der zweiten parallelgeschalteten WS-Ausgangsleistung verknüpft ist, um die zweite parallelgeschaltete WS-Ausgangsleistung bei dem Leistungspegel zu halten.

9. Autosynchrone isolierte Einlassleistungswandler-Konfiguration nach Anspruch 8, wobei der autosynchrone isolierte Neben-Einlassleistungswandler ferner dafür konfiguriert ist, die Steigerung beim Nebenstrom zur WS-Sammelschiene bereitzustellen, bis der autosynchrone isolierte Neben-Einlassleistungswandler nicht dazu in der Lage ist, den Nebenstrom bei einem Strompegel zu erzeugen, der ausreichend ist, um die Spannung der WS-Sammelschiene im Wesentlichen äquivalent zur Referenzspannung zu halten.

10. Autosynchrone isolierte Einlassleistungswandler-Konfiguration nach Anspruch 9, wobei der autosynchrone isolierte Haupt-Einlassleistungswandler ferner dafür konfiguriert ist, eine Steigerung beim Hauptstrom zur WS-Sammelschiene bereitzustellen, wenn der autosynchrone isolierte Neben-Einlassleistungswandler nicht dazu in der Lage ist, den Nebenstrom bei dem Strompegel zu erzeugen, der ausreichend ist, um die Spannung der WS-Sammelschiene im Wesentlichen äquivalent zur Referenzspannung zu halten.

## Revendications

1. Configuration de convertisseur de puissance à entrée isolée autosynchrone, comprenant :
un premier convertisseur de puissance à entrée isolée autosynchrone, inclus dans une pluralité de convertisseurs de puissance à entrée isolée autosynchrone et configuré pour :
produire automatiquement une première puissance (195a) à courant alternatif (CA) de sortie pour le premier convertisseur de puissance à entrée isolée autosynchrone (100a) quand le premier convertisseur de puissance à entrée isolée autosynchrone ne réussit pas à détecter la première puissance (112a) à CA d'entrée externe couplée au premier convertisseur de puissance à entrée isolée autosynchrone, la première puissance à CA de sortie étant une puissance à CA de sortie générée à partir de la puissance à CC du premier convertisseur de puissance à entrée isolée autosynchrone et n'étant pas parallèle à la première puissance à CA d'entrée externe, et
agir en tant que convertisseur de puissance maître à entrée isolée autosynchrone quand le premier convertisseur de puissance à entrée isolée autosynchrone ne réussit pas à détecter la première puissance à CA d'entrée externe couplée au premier convertisseur de puissance à entrée isolée autosynchrone, le convertisseur de puissance maître à entrée isolée autosynchrone procurant automatiquement la première puissance de CA de sortie à un convertisseur de puissance esclave à entrée isolée autosynchrone inclus dans la pluralité de convertisseurs de puissance à entrée isolée autosynchrone ; et
un deuxième convertisseur de puissance à entrée isolée autosynchrone inclus dans la pluralité de convertisseurs de puissance à entrée isolée autosynchrone, configuré pour :
passer automatiquement à la production d'une deuxième puissance à CA de sortie en parallèle, la deuxième puissance à CA de sortie en parallèle étant une deuxième puissance à CA de sortie produite par le deuxième convertisseur de puissance à entrée isolée autosynchrone qui est branché en parallèle avec la première puissance à CA de sortie produite par le premier convertisseur de puissance à entrée isolée autosynchrone, et
agir en tant que convertisseur de puissance esclave à entrée isolée autosynchrone quand le deuxième convertisseur de puissance à entrée isolée autosynchrone détecte la première puissance à CA de sortie fournie par le premier convertisseur de puissance à entrée isolée autosynchrone.

2. Configuration de convertisseur de puissance à entrée isolée autosynchrone selon la revendication 1, dans laquelle la première puissance à CA de sortie est synchronisée avec la deuxième puissance à CA de sortie.

3. Configuration de convertisseur de puissance à entrée isolée autosynchrone selon la revendication 2, dans laquelle une pluralité de caractéristiques de puissance associées à la première puissance à CA de sortie est sensiblement équivalente à une pluralité de caractéristiques de puissance associées à la deuxième puissance à CA de sortie.

4. Configuration de convertisseur de puissance à entrée isolée autosynchrone selon la revendication 3, dans laquelle la première puissance à CA de sortie comprend une onde sinusoïdale qui se trouve à l'intérieur d'un seuil de l'onde sinusoïdale incluse dans la deuxième puissance à CA de sortie.

5. Configuration de convertisseur de puissance à entrée isolée autosynchrone selon la revendication 4, dans laquelle le premier convertisseur de puissance à entrée isolée autosynchrone est en outre configurée pour :
passer automatiquement à la production de la première puissance à CA de sortie en parallèle, quand le premier convertisseur de puissance à entrée isolée autosynchrone détecte que la première puissance à CA d'entrée externe couplée au premier convertisseur de puissance à entrée isolée autosynchrone et la première puissance à CA de sortie sont synchronisés avec la première puissance à CA d'entrée externe, le premier convertisseur de puissance à entrée isolée autosynchrone agissant comme le convertisseur de puissance esclave à entrée isolée autosynchrone.

6. Configuration de convertisseur de puissance à entrée isolée autosynchrone selon la revendication 5, dans laquelle le deuxième convertisseur de puissance à entrée isolée autosynchrone est en outre configuré pour :
produire automatiquement la deuxième puissance à CA de sortie pour le deuxième convertisseur de puissance à entrée isolée autosynchrone quand le deuxième convertisseur de puissance à entrée isolée autosynchrone ne réussit pas à détecter la première puissance à CA de sortie couplée au deuxième convertisseur de puissance à entrée isolée autosynchrone, le deuxième convertisseur de puissance à entrée isolée autosynchrone agissant comme le convertisseur de puissance maître à entrée isolée autosynchrone.

7. Configuration de convertisseur de puissance à entrée isolée autosynchrone selon la revendication 1, dans laquelle le convertisseur de puissance maître à entrée isolée autosynchrone est en outre configuré pour procurer une tension constante à un bus de CA pour maintenir la deuxième puissance à CA de sortie à un certain niveau de puissance, le bus de CA couplant le convertisseur maître de puissance à entrée isolée autosynchrone au convertisseur esclave de puissance à entrée isolée autosynchrone.

8. Configuration de convertisseur de puissance à entrée isolée autosynchrone selon la revendication 7, dans laquelle le convertisseur de puissance esclave à entrée isolée autosynchrone est en outre configuré pour procurer une augmentation du courant esclave vers le bus de CA quand une tension associée au bus de CA diminue en-deçà d'une tension de référence pour accroître la tension pour qu'elle soit sensiblement équivalente à la tension de référence, la tension de référence étant un niveau de tension associé à la deuxième puissance à CA de sortie en parallèle pour maintenir la deuxième puissance à CA de sortie en parallèle au niveau de puissance.

9. Configuration de convertisseur de puissance à entrée isolée autosynchrone selon la revendication 8, dans laquelle le convertisseur de puissance esclave à entrée isolée autosynchrone est en outre configuré pour procurer l'augmentation du courant esclave vers le bus de CA jusqu'à ce que le convertisseur de puissance esclave à entrée isolée autosynchrone ne puisse plus produire le courant esclave à un niveau suffisant pour maintenir la tension du bus de CA pour qu'elle soit sensiblement équivalente à la tension de référence.

10. Configuration de convertisseur de puissance à entrée isolée autosynchrone selon la revendication 9, dans laquelle le convertisseur de puissance maître à entrée isolée autosynchrone est en outre configuré pour procurer une augmentation du courant maître vers le bus de CA quand le convertisseur de puissance à entrée isolée autosynchrone n'est pas à même de produire le courant esclave au niveau de courant suffisant pour maintenir la tension du bus de CA pour qu'elle soit sensiblement équivalente à la tension de référence.
